# EUROPÄISCHE PATENTSCHRIFT

(11) **EP 3 705 805 B1**
(45) Veröffentlichungstag und Bekanntmachung des Hinweises auf die Patenterteilung: **18.09.2024**
(21) Anmeldenummer: 20161508.5
(22) Anmeldetag: 06.03.2020
(51) Int. Cl.: F24H 1/18, B29C 44/00, F28D 20/00, F24D 17/00

(54) **WARMWASSER-KLEINSPEICHER**
SMALL HOT WATER STORAGE DEVICE
PETIT ACCUMULATEUR D'EAU CHAUDE

(30) Priorität: 08.03.2019 DE 102019001629
(43) Veröffentlichungstag der Anmeldung: 09.09.2020
(73) Patentinhaber: Stiebel Eltron GmbH & Co. KG, 37603 Holzminden (DE)
(72) Erfinder: HOFFMANN, Felix, 37269 Eschwege (DE)

(56) Entgegenhaltungen:
- EP-A2- 2 700 886
- EP-A2- 3 315 872
- DE-A1- 102004 013 623
- DE-U1- 20 109 029
- FR-A1- 2 803 652
- JP-A- 2015 175 530
- JP-A- 2016 205 648

## Beschreibung

Die vorliegende Erfindung betrifft einen Warmwasser-Kleinspeicher.

Warmwasser-Kleinspeicher weisen ein Speichervolumen typischerweise von ≤ 20 Ltr. auf. Ein Warmwasser-Kleinspeicher wird zur Warmwasserversorgung eingesetzt.

Die Druckschrift JP 2015175530 A zeigt einen Warmwasserspeicher mit einem zylindrischen Speicherbehälter und mit einem geformten wärmeisolierenden Material, das den Speicherbehälter des Warmwasserspeichers abdeckt. Ein Vakuum-Wärmeisoliermaterial ist vorgesehen, wobei das Vakuum-Wärmeisoliermaterial das Wärmeisoliermaterial umgibt.

In JP 2016205648 A wird ein Warmwasserspeicher mit einem zylindrischen Speicherbehälter gezeigt. Dabei ist der zylindrische Speicherbehälter teilweise mit einem Vakuum-Wärmeisoliermaterial umgeben. Auf der Ober- und Unterseite ist ein geformtes Isoliermaterial angeordnet.

Dokument DE 102004013623 A1 lehrt einen Warmwasserbereiter, bestehend aus einem Behälteroberteil und einem Behälterunterteil, wobei das Behälterunterteil eine Öffnung aufweist und ein elektrisches Heizelement aufnimmt.

Es ist eine Aufgabe der vorliegenden Erfindung, einen Warmwasser-Kleinspeicher mit geringen Abmessungen vorzusehen.

Diese Aufgabe wird gelöst durch einen Warmwasser-Kleinspeicher nach Anspruch 1.

Der Warmwasser-Kleinspeicher weist eine elektrische Heizeinheit zum Erwärmen des sich innerhalb des Speicherbehälters befindlichen Wassers auf. Der Speicherbehälter weist ein Volumen von ≤ 20 Liter. auf. Direkt auf der Außenseite des Speicherbehälters werden Vakuumisolationspaneele vorgesehen. Der Speicherbehälter mit den Vakuumisolationspaneelen wird mittels eines EPS umschäumt. Hierbei wird das EPS direkt auf der Außenseite der Vakuumisolationspaneele vorgesehen.

Gemäß der vorliegenden Erfindung weist der Speicherbehälter im unteren Bereich eine Öffnung zur Aufnahme eines Flansches mit einem elektrischen Heizkörper auf. Der Bereich um den Flansch ist nicht umschäumt, damit der Flansch auch nachträglich zugänglich ist.

Gemäß einem weiteren Aspekt der vorliegenden Erfindung befindet sich ein elektrischer Heizkörper innerhalb des Speicherbehälters, ohne dass er herausnehmbar beispielsweise mittels eines Flansches ausgestaltet ist.

Gemäß der vorliegenden Erfindung ist der Speicherbehälter ein Kunststoffbehälter und die Vakuumisolationspaneele sind direkt auf der Außenseite des Kunststoffbehälters vorgesehen und die EPS-Umschäumung befindet sich direkt an der Außenseite der Vakuumisolationspaneele. Der Kunststoffbehälter kann drucklos ausgestaltet sein.

Gemäß der vorliegenden Erfindung ist der Kunststoffbehälter zweiteilig ausgestaltet und die beiden Teile des Kunststoffbehälters sind miteinander verschweißt.

Durch die Verwendung der Vakuumisolationspaneele können die Baumaße des Kleinspeichers reduziert werden. Damit können auch Kleinspeicher mit möglichst geringen Abmessungen vorgesehen werden, sodass ein möglicher Einsatzort dieser Kleinspeicher vergrößert wird.

Gemäß der vorliegenden Erfindung ist ein Warmwasser-Kleinspeicher vorgesehen, welcher einen Speicherbehälter aufweist, wobei unmittelbar auf dem Speicherbehälter mindestens ein Vakuumisolationspaneel vorgesehen ist, das wiederum durch einen EPS-Schaum unmittelbar umschäumt ist. Durch das Vorsehen des Vakuumisolationspaneels und der EPS-Umschäumung kann eine Reduzierung der Bereitschaftsenergie für den Kleinspeicher erreicht werden. Insbesondere kann im zylindrischen Bereich des Behälters mindestens ein Vakuumisolationspaneel vorgesehen sein.

Gemäß einem Aspekt der vorliegenden Erfindung ist die Höhe der Vakuumisolationspaneele so ausgestaltet, dass sie den oberen Bereich des Speicherbehälters überragen. Dies führt zu einer weiteren Verbesserung der Isolationseigenschaft und damit zu einer Reduzierung der Bereitschaftsenergie.

Mit dem erfindungsgemäßen Warmwasser-Kleinspeicher kann eine Reduzierung des Bereitschaftsenergieverbrauchs gleichzeitig mit einer Reduzierung der Gerätemaße ermöglicht werden.

Durch das Umschäumen des Speicherbehälters und der Vakuumisolationspaneele mit EPS können auch diejenigen Bereiche des Speicherbehälters, welche nicht durch die Vakuumisolationspaneele bedeckt sind, isoliert werden.

Durch die Umschäumung mit EPS können Abschnitte vorgesehen sein, in welche die Regler oder weitere Komponenten des Kleinspeichers vorgesehen werden können, ohne dabei die Außenmaße des Speicherbehälters zu vergrößern.

Weitere Ausgestaltungen der Erfindung sind Gegenstand der Unteransprüche.

Vorteile und Ausführungsbeispiele der Erfindung werden nachstehend unter Bezugnahme auf die Zeichnungen näher erläutert.
- Fig. 1A und 1B: zeigen eine schematische Schnittansicht und eine schematische Draufsicht auf einen nicht erfindungsgemäßen Warmwasser-Kleinspeicher gemäß einem ersten Beispiel,
- Fig. 2A und 2B: zeigen jeweils eine schematische Schnittansicht und eine schematische Draufsicht auf einen nicht erfindungsgemäßen Warmwasser-Kleinspeicher gemäß einem zweiten Beispiel,
- Fig. 3A und 3B: zeigen jeweils eine schematische Schnittansicht und eine schematische Draufsicht auf einen nicht erfindungsgemäßen Warmwasser-Kleinspeicher gemäß einem dritten Beispiel,
- Fig. 4A und 4B: zeigen jeweils eine schematische Schnittansicht und eine schematische Draufsicht auf einen nicht erfindungsgemäßen Warmwasser-Kleinspeicher gemäß einem vierten Beispiel,
- Fig. 5A und 5B: zeigen jeweils eine schematische Schnittansicht und eine schematische Draufsicht auf einen nicht erfindungsgemäßen Warmwasser-Kleinspeicher gemäß einem fünften Beispiel,
- Fig. 6A und 6B: zeigen jeweils eine schematische Schnittansicht und eine schematische Draufsicht auf einen nicht erfindungsgemäßen Warmwasser-Kleinspeicher gemäß einem sechsten Beispiel,
- Fig. 7A und 7B: zeigen jeweils eine schematische Schnittansicht und eine schematische Draufsicht auf einen nicht erfindungsgemäßen Warmwasser-Kleinspeicher gemäß einem siebten Beispiel, und
- Fig. 8A und 8B: zeigen jeweils eine schematische Schnittansicht und eine schematische Draufsicht auf einen nicht erfindungsgemäßen Warmwasser-Kleinspeicher gemäß einem achten Beispiel.
- Fig. 9A und 9B: zeigen jeweils eine schematische Schnittansicht und eine schematische Draufsicht auf einen Warmwasser-Kleinspeicher gemäß der Erfindung.
- und Fig. 10: zeigt ein einteiliges Vakuumpaneel 120 mit einer Siegelnaht 126 gemäß der Erfindung.

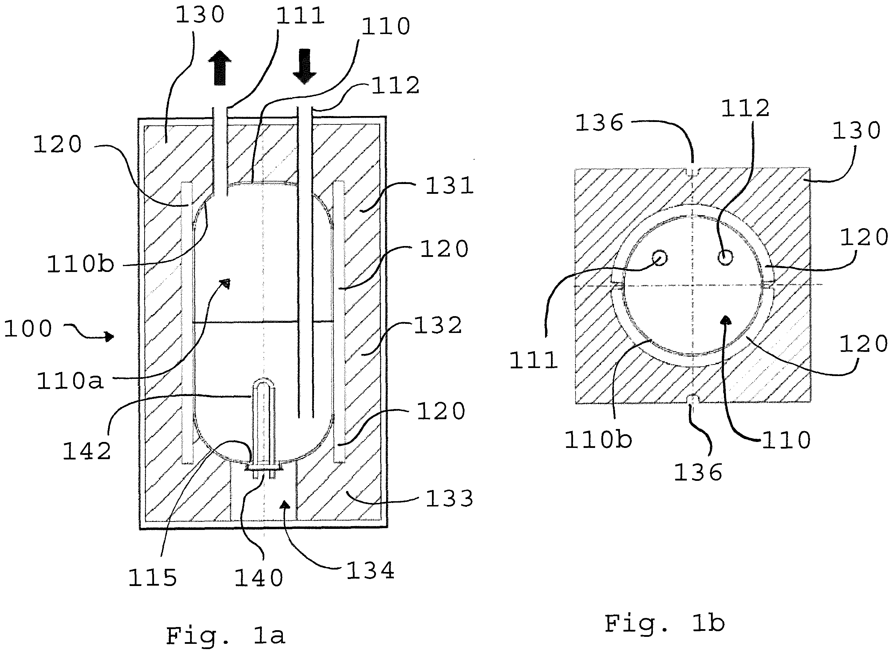

Fig. 1A und 1B zeigen eine schematische Schnittansicht und eine schematische Draufsicht auf einen Warmwasser-Kleinspeicher gemäß einem nicht erfindungsgemäßen ersten Beisbeispiel. Der Warmwasser-Kleinspeicher 100 weist einen Speicherbehälter 110 mit einem Speichervolumen von ≤ 20 Ltr. auf. Der Speicherbehälter 110 kann alternativ dazu beispielsweise ein Speichervolumen von 5 Ltr., 10 Ltr. oder 15 Ltr. aufweisen. Andere Volumen sind ebenfalls möglich.

Der Speicherbehälter 100 weist ein Speichervolumen 110a, einen Ablauf 111, einen Zulauf 112 und eine Speicherbehälterwandung 110b auf. An einem Ende (das obere Ende) des Speicherbehälters ist der Ablauf111 vorgesehen. Der Zulauf 112 ragt in das Volumen 110a hinein und weist ein freies Ende 112a auf, welches sich im unteren Bereich des Speicherbehälters 110 befindet. Im unteren Bereich des Speicherbehälters ist ferner eine Öffnung 115 vorgesehen, in welche ein Flansch 140 mit einem elektrisch betreibbaren Heizelement 142 eingeführt werden kann.

Um die Wandung 110b des Speicherbehälters 110, insbesondere um den zylindrischen Teil der Wandung, ist mindestens ein Vakuumisolationspaneel 120 vorgesehen. Gemäß dem ersten nicht erfindungsgemäßen Beispiel erstreckt sich das Paneel 120 nicht um das obere und untere Ende. Das obere und untere Ende des Speicherbehälters ist damit frei von Vakuumisolationspaneelen. Um den Speicherbehälter 110 und die Vakuumisolationspaneele 120 ist ein EPS umschäumt. Der geschäumte Schaum 130 weist ein oberes Ende 131, einen mittleren Abschnitt 132, ein unteres Ende 133 sowie eine Öffnung 134 auf. Im Bereich des oberen Endes befinden sich der Zulauf 112 und der Ablauf 111. Im Bereich des unteren Endes ist die Öffnung 134 vorgesehen, sodass der Flansch 140 frei von unten zugänglich ist und damit nicht umspritzt ist. Damit kann gewährleistet werden, dass der Flansch und die sich daran befindliche elektrische Heizeinheit 142 demontierbar sind. Wie aus Fig. 1B hervorgeht, weist der Speicherbehälter einen zylindrischen Mantel auf, welcher durch ein oder zwei Vakuumisolationspaneele 120 umschlossen ist. Die Vakuumisolationspaneele 120 sind unmittelbar auf der Wandung 110b des Behälters platziert. Unmittelbar an der Außenseite der Vakuumisolationspaneele 120 ist die Umschäumung 130 vorgesehen. Die Umschäumung 130 kann eine Recyclingnut 136 an der Vorderseite und eine Recyclingnut 136 an der Rückseite aufweisen.

Beschrieben ist hier einen Speicher, der vorteilhaft unter einem Waschbecken oder einer Küchenspüle montiert wird. Dieser Speicher ist auch zur Montage über einem Waschbecken oder über einer Spüle geeignet, wobei in diesem Anwendungsfall die Wasseranschlüsse vorteilhaft nach unten und der Heizflansch ist dann oben zeigt.

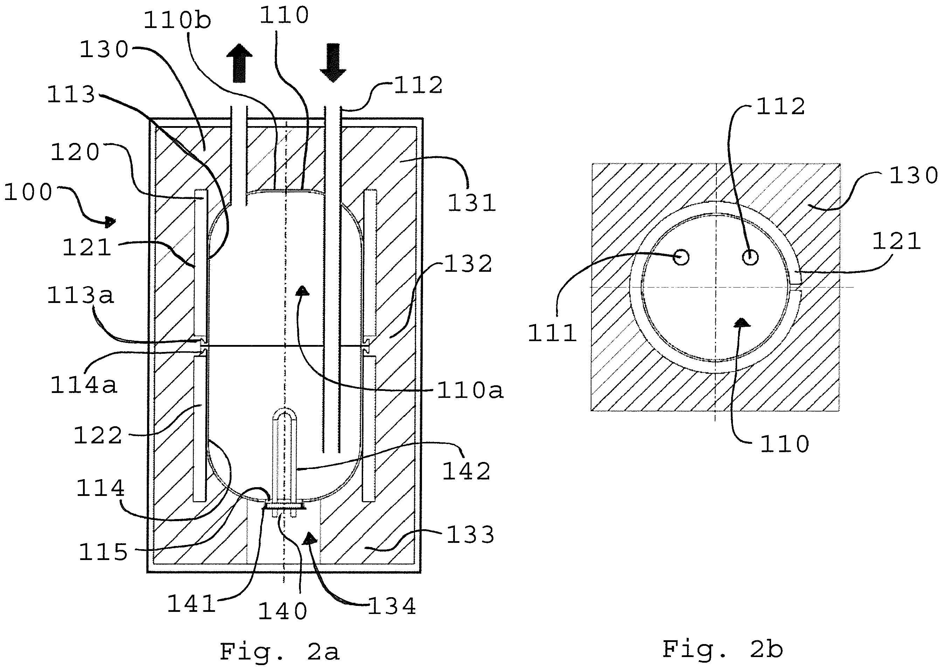

Fig. 2A und 2B zeigen jeweils eine schematische Schnittansicht und eine schematische Draufsicht auf einen Warmwasser-Kleinspeicher gemäß einem nicht erfindungsgemäßen zweiten Ausführungsbeispiel. Der Kleinspeicher 100 weist einen Speicherbehälter 110 mit einem Speichervolumen 110a von ≤ 20 I und einer Speicherbehälterwandung 110b auf. Der Speicherbehälter besteht aus zwei Hälften 113, 114, welche an ihren freien Enden 113a, 114a aneinander befestigt werden. Dies kann beispielsweise durch Reibschweißen erfolgen. Der Speicherbehälter 110 ist vorzugsweise ein Kunststoff-Speicherbehälter. Die untere Hälfte 114 des Speicherbehälters 110 weist eine Öffnung 115 zur Aufnahme eines Flansches 140 auf. Der Flansch 140 kann ein elektrisch betreibbares Heizelement 142 aufweisen. Der Speicherbehälter weist ferner einen Ablauf 111 und einen Zulauf 112 auf. Der Zulauf 112 reicht weit in das Innere des Behälters hinein und weist ein freies Ende 112a auf. Unmittelbar an der Außenseite der Wandung 110b des Behälters 110 sind Vakuumisolationspaneele 120, 121, 122 vorgesehen. Insbesondere sind zwei Vakuumisolationspaneele 121, 122 vorgesehen, welche jeweils die obere und untere Gehäusehälfte 113, 114 umgeben. Um die Vakuumisolationspaneele 120, 121, 122 herum ist ein EPS-Schaum vorgesehen. Der Schaum weist ein oberes Ende 131, einen mittleren Abschnitt 132 und einen unteren Abschnitt 133 mit einer Öffnung 134 auf. Die Öffnung 134 ist groß genug, damit der Flansch dort durchgeführt und an der Öffnung 115 des Speicherbehälters 110 befestigt werden kann.

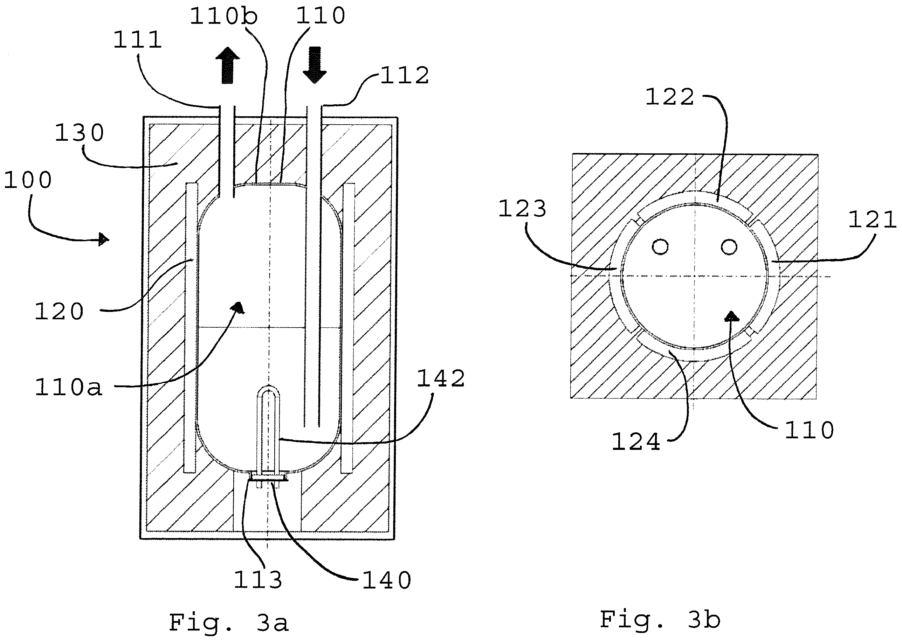

Fig. 3A und 3B zeigen jeweils eine schematische Schnittansicht und eine schematische Draufsicht auf einen Warmwasser-Kleinspeicher gemäß einem nicht erfindungsgemäßen dritten Beispiel. Der Kleinspeicher 100 gemäß dem nicht erfindungsgemäßen dritten Beispiel kann im Wesentlichen dem Kleinspeicher gemäß dem nicht erfindungsgemäßen ersten Beispiel entsprechen und weist einen Speicherbehälter 110 mit einem Ablauf 111, einem Zulauf 112 und einer Öffnung 115 zur Aufnahme eines Heizflansches 140 auf. Um den Behälter herum bzw. insbesondere um den Mantel des Speicherbehälters herum kann mindestens ein Vakuumisolationspaneel 120 vorgesehen sein.

Wie aus Fig. 3B zu sehen, bestehen die Vakuumisolationspaneele 120 im Querschnitt aus vier verschiedenen Vakuumisolationspaneelen 121 - 124, welche um den Speicherbehälter 10 herum platziert sind.

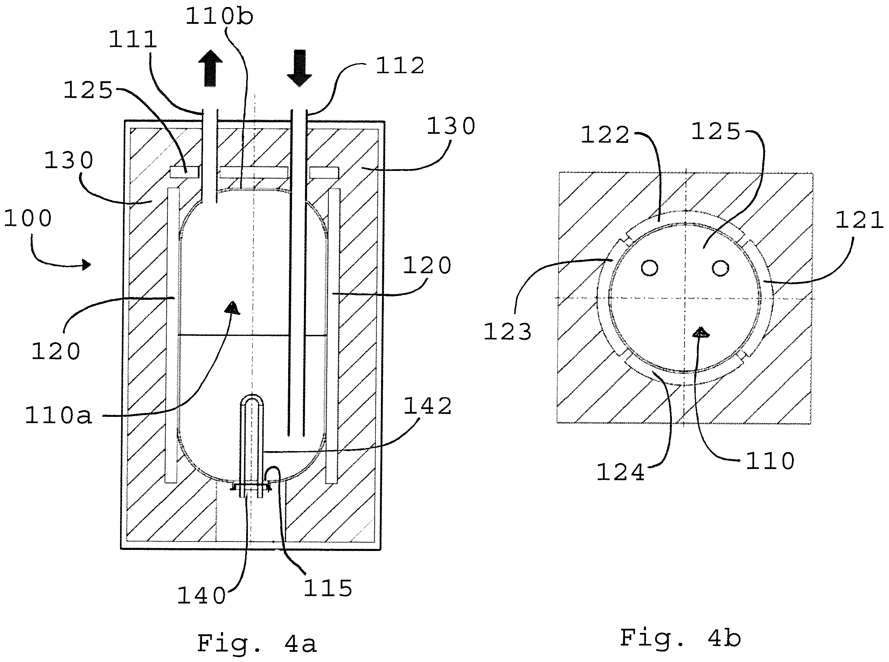

Fig. 4A und 4B zeigen jeweils eine schematische Schnittansicht und eine schematische Draufsicht auf einen Warmwasser-Kleinspeicher gemäß einem vierten nicht erfindungsgemäßen Beispiel. Der Kleinspeicher 100 gemäß dem vierten Beispiel entspricht im Wesentlichen dem Kleinspeicher gemäß dem ersten Beispiel. Zusätzlich dazu weist der Kleinspeicher ein Vakuumisolationspaneel 125 auf, welches im oberen Bereich des Kleinspeichers angeordnet ist. Der restliche Aufbau des Kleinspeichers gemäß dem vierten Beispiel entspricht dabei dem Kleinspeicher gemäß dem ersten oder dem dritten Beispiel. Wie in Fig. 4B zu sehen, können vier separate Vakuumisolationspaneele 121 - 124 um den Umfang bzw. den Mantel des Speicherbehälters herum vorgesehen sein. Das Vakuumisolationspaneel 125 ist im oberen Bereich bzw. im Bereich des Deckels des Speicherbehälters vorgesehen. Das Vakuumisolationspaneel dient der thermischen Isolierung des Speichers. Die EPS-Umschäumung 130 dient der weiteren Verbesserung der Isolation des Speicherbehälters.

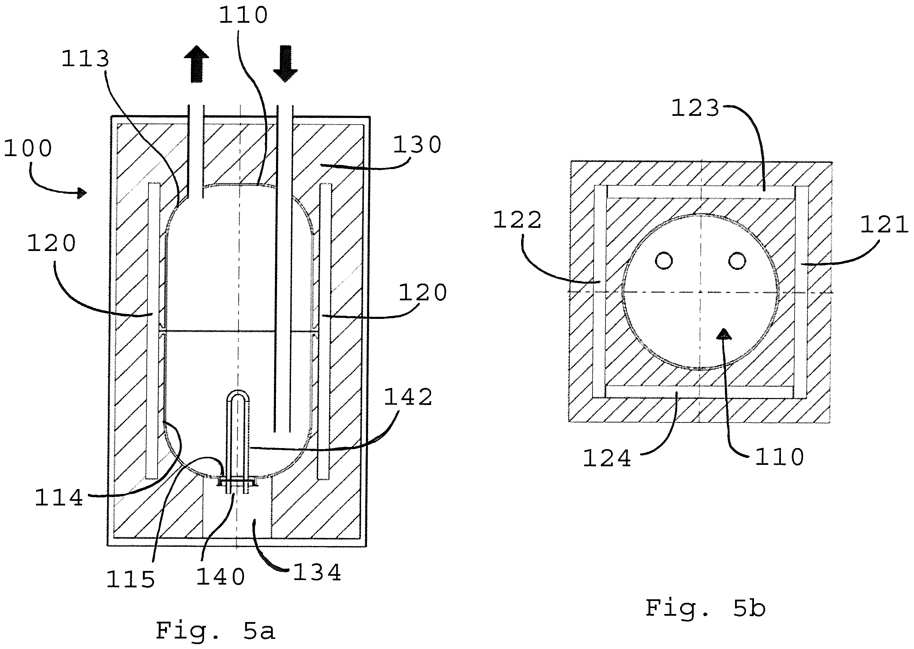

Fig. 5A und 5B zeigen jeweils eine schematische Schnittansicht und eine schematische Draufsicht auf einen Warmwasser-Kleinspeicher gemäß einem nicht erfindungsgemäßen fünften Ausführungsbeispiel. Der Kleinspeicher gemäß dem fünften Beispiel basiert auf dem Kleinspeicher gemäß dem nicht erfindungsgemäßen zweiten Beispiel. Die Ausgestaltung des Speicherbehälters 110 entspricht dabei der Ausgestaltung des Speicherbehälters gemäß dem zweiten Beispiel. Lediglich die Anordnung der Vakuumisolationspaneele ist im fünften Beispiel anders als im zweiten Beispiel. Während im zweiten Beispiel die Vakuumisolationspaneele kreisförmig angeordnet sind, sind gemäß dem fünften Beispiel vier Vakuumisolationspaneele vorgesehen, welche gerade ausgestaltet sind und den Speicherbehälter 110 umgeben.

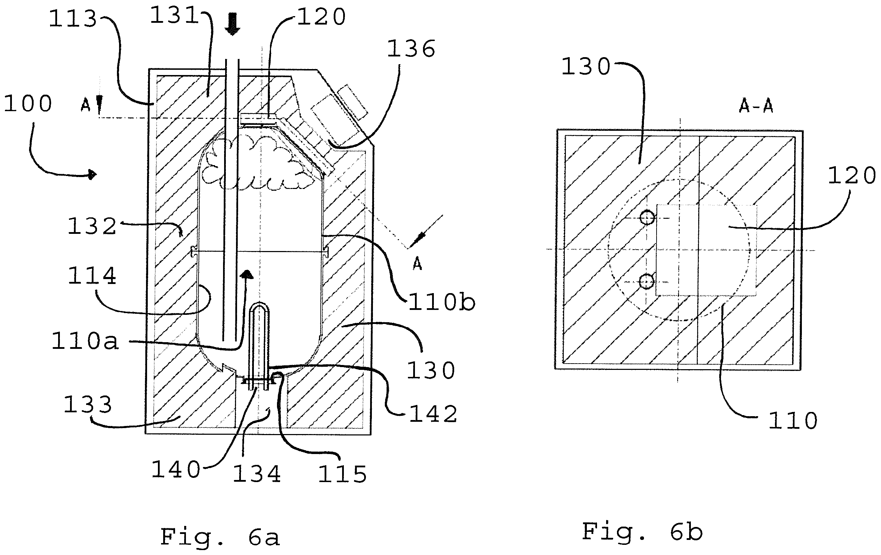

Fig. 6A und 6B zeigen jeweils eine schematische Schnittansicht und eine schematische Draufsicht auf einen Warmwasser-Kleinspeicher gemäß einem nicht erfindungsgemäßen sechsten Beispiel. Der Warmwasser-Speicher 100 gemäß dem sechsten Beispiel weist vorzugsweise einen Kunststoff-Speicherbehälter 110 mit einem Volumen 110a von ≤ 20 Ltr., insbesondere 5 Ltr., 10 Ltr. oder 15 Ltr. auf. Der Speicherbehälter 110 ist zweiteilig bzw. mit zwei Hälften 113, 114 ausgeführt. Die zweite Hälfte 114 weist eine Öffnung 115 zur Aufnahme eines Heizflansches 140 auf. Der Speicherbehälter 110 weist einen Zulauf 112 auf, welcher vorzugsweise weit in das Innere des Speicherbehälters hineinragt. Das warme Wasser H innerhalb des Speicherbehälters 110 wird sich im oberen Bereich des Speicherbehälters ansammeln. Gemäß dem sechsten Beispiel ist im oberen Bereich des Speichers ein Vakuumisolationspaneel 120 vorgesehen, welches insbesondere einen Teil der oberen Hälfte des Speicherbehälters 110 abdeckt. Dies ist vorteilhaft, weil somit auf einfache und effektive Art und Weise eine verbesserte Isolierung des Speicherbehälters vorgesehen sein kann.

Der Speicherbehälter 110 und die Vakuumisolationspaneele 120 können durch ein EPS umspritzt sein.

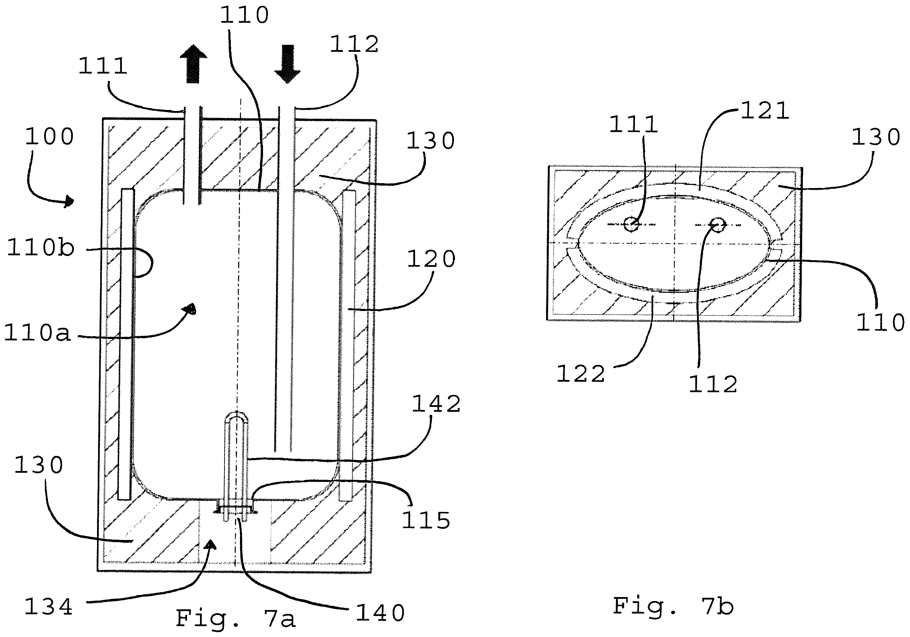

Fig. 7A und 7B zeigen jeweils eine schematische Schnittansicht und eine schematische Draufsicht auf einen Warmwasser-Kleinspeicher gemäß einem nicht erfindungsgemäßen siebten Beispiel. Der Kleinspeicher 110 gemäß dem siebten Beispiel weist einen Speicherbehälter 110 mit einem Volumen 110a von ≤ 20 Ltr. auf. Der Speicherbehälter weist eine Wandung 110b sowie eine Öffnung 115 auf, welche sich im unteren Bereich befindet und zur Aufnahme eines Heizflansches 140 mit einem elektrisch betreibbaren Heizelement 142 auf. Um den Umfang des Speicherbehälters 110 herum kann mindestens ein Vakuumisolationspaneel 120 vorgesehen sein. Gemäß dem siebten Beispiel ist der Speicherbehälter 110 im Querschnitt oval ausgestaltet, wodurch eine Verringerung der Tiefe des Kleinspeichers erreicht werden kann. Die Vakuumisolationspaneele 120 sind unmittelbar auf der Außenseite der Wandung 110b des Speicherbehälters vorgesehen. Der EPS-Schaum 130 wird unmittelbar an der Außenseite der Vakuumisolationspaneele 120 vorgesehen bzw. geschäumt.

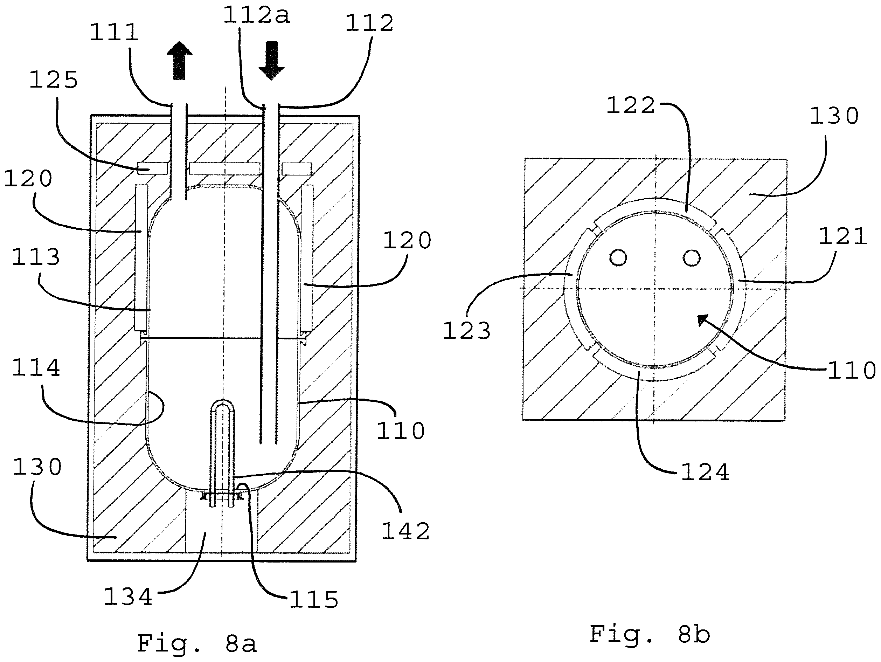

Fig. 8A und 8B zeigen jeweils eine schematische Schnittansicht und eine schematische Draufsicht auf einen Warmwasser-Kleinspeicher gemäß einem nicht erfindungsgemäßen achten Beispiel. Der Kleinspeicher 100 gemäß dem achten Beispiel weist einen Speicherbehälter 110 auf. Der Speicherbehälter 110 gemäß dem achten Beispiel kann dem Speicherbehälter 110 gemäß dem nicht erfindungsgemäßen zweiten Beispiel im Wesentlichen entsprechen. Der Speicherbehälter 110 ist zweiteilig mit einer oberen und unteren Hälfte 113, 114 vorgesehen. Die untere Hälfte weist eine Öffnung 115 zur Aufnahme eines Heizflansches mit einem elektrisch betreibbaren Heizelement 142 auf. Um die äußere Wandung der oberen Hälfte 113 ist mindestens ein Vakuumisolationspaneel vorgesehen. Ein weiteres Vakuumisolationspaneel 125 ist im oberen Bereich des Speicherbehälters vorgesehen. Wie aus Fig. 8 hervorgeht, ist das Vakuumisolationspaneel im Querschnitt vierteilig ausgestaltet, sodass vier Vakuumisolationspaneele 121 - 124 vorgesehen sind.

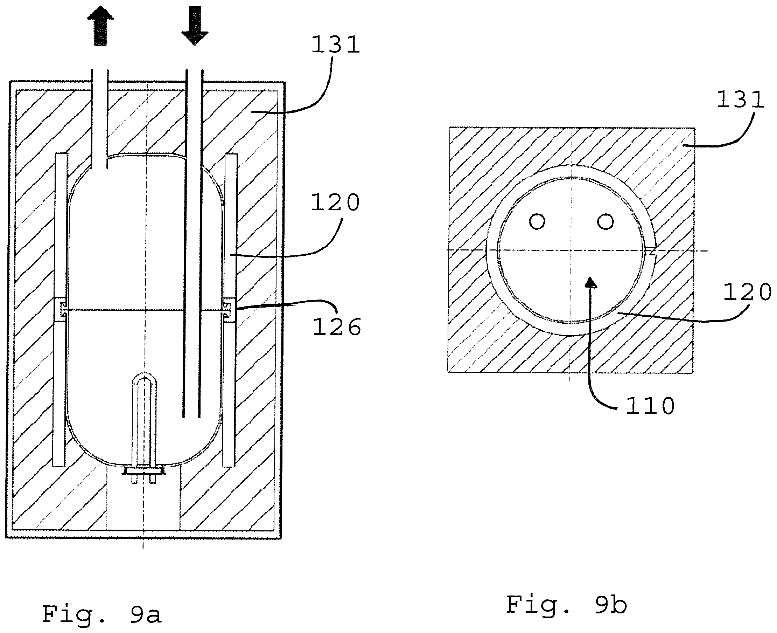

Fig. 9A und 9B zeigen jeweils eine schematische Schnittansicht und eine schematische Draufsicht auf einen Warmwasser-Kleinspeicher gemäß einem erfindungsgemäßen Ausführungsbeispiel. Der Kleinspeicher 100 gemäß dem erfindungsgemäßen Ausführungsbeispiel weist einen Speicherbehälter 110 auf. Der Speicherbehälter 110 gemäß dem erfindungsgemäßen Ausführungsbeispiel kann dem Speicherbehälter 110 gemäß dem nicht erfindungsgemäßen zweiten Beispiel im Wesentlichen entsprechen. Der Speicherbehälter 110 ist zweiteilig mit einer oberen und unteren Hälfte 113, 114 vorgesehen. Die untere Hälfte weist eine Öffnung 115 zur Aufnahme eines Heizflansches mit einem elektrisch betreibbaren Heizelement 142 auf. Um die äußere Wandung der oberen Hälfte 113 und der unteren Hälfte 114 ist mindestens ein Vakuumisolationspaneel vorgesehen, dass im Bereich der Schweißzone 113a und 113b durch eine Siegelnaht der Barrierefolie des Vakumpaneel verbunden ist.

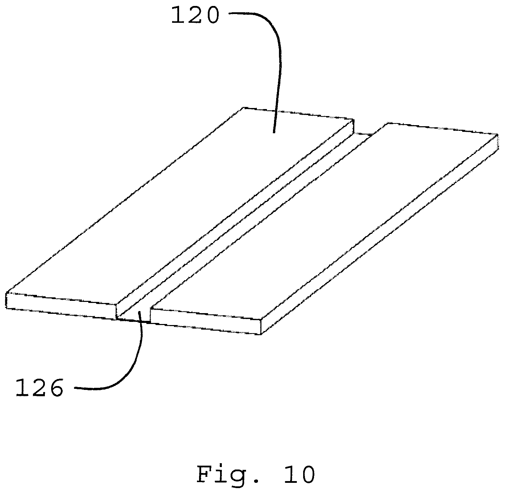

Fig. 10 zeigt ein solches Vakuumpaneel mit einer Siegelnaht im unverbauten Zustand. Dieses Paneel wird um den Behälter gewickelt.

## Patentansprüche

1. Warmwasser-Kleinspeicher (100) mit
einem Speicherbehälter (110) mit einem Volumen (110a) von ≤ 20 Ltr.,
einem elektrisch betreibbaren Heizelement (142),
wobei der Speicherbehälter (110) als Kunststoffbehälter ausgestaltet ist und ein oberes und ein unteres Teil (113, 114) aufweist,
wobei der untere Teil (114) des Speicherbehälters (110) eine Öffnung (115) aufweist und
wobei ein Heizflansch (140) mit dem elektrisch betreibbaren Heizelement (142) durch die Öffnung (115) eingeführt wird, sodass der Heizflansch (140) in das Speichervolumen (110a) hineinragt und das elektrisch beheizbare Heizelement (142) das sich in dem Speichervolumen (110a) befindliche Wasser erwärmt,
**dadurch gekennzeichnet, dass**
mindestens ein Vakuumisolationspaneel (120) direkt auf dem Speicherbehälter (110) um die äußere Wandung der oberen Hälfte (113) und der unteren Hälfte (114) und eine EPS-Umschäumung (130) direkt an der Außenseite des mindestens einen Vakuumisolationspaneels (120) vorgesehen ist, wobei die EPS-Umschäumung (130) die komplette Außenseite des mindestens einen Vakuumisolationspaneels (120) umgibt,
wobei das obere und das untere Teil des Speicherbehälters (110) miteinander entlang einer Schweißzone (113a, 114a) verschweißt sind,
wobei das mindestens eine Vakuumisolationspaneel (120) zwei Abschnitte mit einer Siegelnaht (126) dazwischen aufweist, wobei die Siegelnaht (126) die Schweißzone (113a, 114a) im montierten Zustand abdeckt.

2. Warmwasser-Kleinspeicher nach Anspruch 1,
**dadurch gekennzeichnet,**
**dass** der Speicherbehälter (110) als druckloser Kunststoffbehälter ausgestaltet ist.

## Claims

1. A small water heater (100), comprising:
a storage tank (110) having a volume (110a) of ≤ 20 litres,
an electrically operable heating element (142),
wherein the storage tank (110) is configured as a plastic tank and includes a top and a bottom part (113, 114),
wherein the bottom part (114) of the storage tank (110) includes an opening (115), and
wherein a flanged immersion heater (140) comprising the electrically operable heating element (142) is introduced through the opening (115) such that the flanged immersion heater (140) projects into the tank volume (110a) and the electrically operable heating element (142) heats the water located inside the tank volume (110a),
**characterised in that**
at least one vacuum insulation panel (120) is provided directly on the storage tank (110) around the outer wall of the top half (113) and the bottom half (114), and an EPS foam (130) is provided directly on the outer side of the at least one vacuum insulation panel (120), wherein the EPS foam (130) surrounds the entire outer side of the at least one vacuum insulation panel (120),
wherein the top and the bottom part of the storage tank (110) are welded together along a weld zone (113a, 114a),
wherein the at least one vacuum insulation panel (120) includes two sections with a sealing joint (126) therebetween, wherein the sealing joint (126) in the installed state covers the weld zone (113a, 114a).

2. The small water heater according to claim 1,
**characterised in that**
the storage tank (110) is configured as a non-pressurised plastic tank.

## Revendications

1. Petit ballon d'eau chaude (100), comprenant :
une cuve (110) d'un volume (110a) de ≤ 20 L,
un élément chauffant (142) à commande électrique ;
dans lequel la cuve (110) se présente sous forme de récipient en plastique et comporte une partie supérieure et une partie inférieure (113, 114),
dans lequel la partie inférieure (114) de la cuve (110) comporte une ouverture (115), et
dans lequel une résistance chauffante (140) comportant l'élément chauffant (142) à commande électrique est insérée dans l'ouverture (115), la résistance chauffante (140) faisant saillie dans le volume de cuve (110a) et l'élément chauffant (142) à commande électrique chauffant l'eau se trouvant dans ledit volume de cuve (110a),
**caractérisé en ce que**
au moins un panneau d'isolation sous vide (120) est prévu directement sur la cuve (110) autour de la paroi extérieure de sa moitié supérieure (113) et de sa moitié inférieure (114), et une mousse en EPS (130) est prévue directement sur l'extérieur de l'au moins un panneau d'isolation sous vide (120), la mousse en EPS (130) entourant l'extérieur complet de l'au moins un panneau d'isolation sous vide (120),
lesdites parties supérieure et inférieure de la cuve (110) étant soudées l'une à l'autre le long d'une zone de soudure (113a, 114a),
ledit au moins un panneau d'isolation sous vide (120) comprenant deux sections présentant un joint scellé (126) entre elles, le joint scellé (126) couvrant la zone de soudure (113a, 114a) à l'état monté.

2. Petit ballon d'eau chaude selon la revendication 1,
**caractérisé en ce que**
la cuve (110) se présente sous forme de récipient en plastique sans pression.
